# EUROPEAN PATENT APPLICATION

(11) **EP 4 183 715 A1**
(43) Date of publication of application: **24.05.2023**
(21) Application number: 21209399.1
(22) Date of filing: 19.11.2021
(51) Int. Cl.: B65G 1/04

(54) **A METHOD FOR AUTOMATICALLY HANDLING A PLURALITY OF PRODUCT CONTAINERS, AND A RELATED SYSTEM**

(71) Applicant: Fameccanica.Data S.p.A., 66020 San Giovanni Teatino (CH) (IT)
(72) Inventor: GALANTE, Dario, I-66020 San Giovanni Teatino (Chieti) (IT); FAIETA, Fabrizio, I-66020 San Giovanni Teatino (Chieti) (IT)
(74) Representative: Marchitelli, Mauro

(57) **Abstract**

Method and system (1) or automatically handling a plurality of product containers (A). The method comprises the steps of:
- providing a container exchange apparatus (4) comprising a pair of platforms (5) for temporarily hosting containers (A) to be transferred,
- moving the platforms (5) along a conveyor device (3) and a shelving unit (2),
- driving shifting means (11) for exchanging containers (A) from the conveyor device (3) to the shelving unit (2), and vice-versa, via the platforms (5) .

## Description

### Field of invention

The present invention relates in general to the field of logistics, in particular to the field of logistics in warehouses or industrial plants for managing products, containers, boxes, packages, materials, etc.

More specifically, the invention relates to a method for automatically handling a plurality of product containers, such as tote-boxes which are used in industrial and commercial environments for secure stacking and effective content protection.

Embodiments of the present invention also relates to an automatic warehouse system for handling a plurality of product containers.

### Description of the related art

To date, logistic activities related to managing product containers, packages and boxes to be delivered to respective destinations are substantially totally entrusted to manual operations carried out by trained operators. Usually, the products to be delivered are contained in respective containers, such as tote-boxes, which are stacked at pick-up stations, in which a human operator reads a barcode through a barcode reader, or visually reads the label, and manually grasps the container for delivering to a specific shipping area.

According to known solutions, the containers are transported by means of a conveyor towards a pick-up station. An operator manually moves the containers from the conveyor to a shelving unit for holding a plurality of containers. When the containers have to be shipped, an operator manually picks the containers for delivering to a proper shipping area.

The main drawback of these known solutions is given by the fact that the operations are substantially totally manual, therefore subjected to mistakes and requiring proper training for the operators, without ensuring high repeatability and reliability of the operations. Furthermore, the known solutions may cause non-ergonomic actions to be carried out by the operators.

### Object and summary of the invention

The object of the present invention is to provide a method and a system for automatically handling a plurality of product containers which overcome the problems and the limitations of the prior art.

In accordance with the present invention, this object is achieved by a method having the features of claim 1 and by a system having the features of claim 9.

Optional features of the invention form the subject of the dependent claims.

The claims are an integral part of the disclosure submitted in relation to the invention.

According to another aspect, the invention also relates to a computer program product, including software code portions for performing a method for automatically handling a plurality of product containers.

### Brief description of the drawings

Further characteristics and advantages of the invention will become clear from the following description, given purely as a non-limiting example, with reference to the attached drawings, wherein:
- Figure 1 is a schematic plan view of an automatic system for handling product containers, according to a preferred embodiment of the present invention,
- Figure 2 is a schematic side view of the system illustrated in Figure 1,
- Figures 3, 4 are schematic views showing enlarged details of the system according to the invention,
- Figure 5 is a schematic plan view of an automatic system for handling product containers, according to a further embodiment of the present invention, and
- Figure 6 is a schematic side view of the system illustrated in Figure 5.

### Detailed description

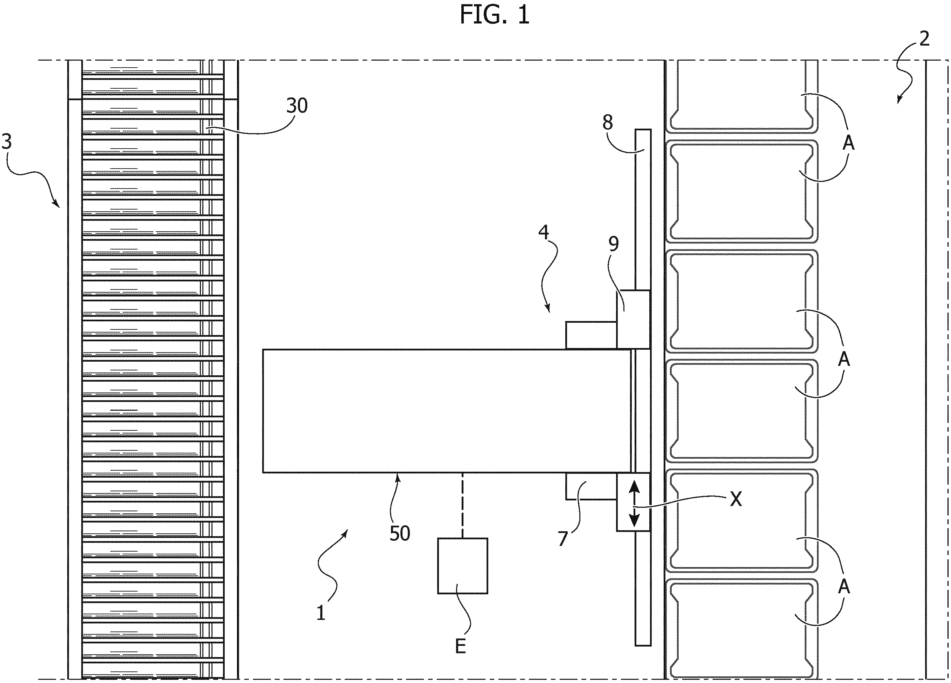

With reference to Figures 1, 2, 5, 6, numeral reference 1 indicates an automatic warehouse system for handling product containers A. In the example shown in the figures, the product containers A are tote-boxes, provided for containing a plurality of products -for example consumer products-. The tote-boxes are widely used in industrial and commercial environments for secure stacking and content protection, in compliance with the industrial standards and regulations. Naturally, the present invention is also applicable to any kind of containers A having different shape and size, with respect to those illustrated in the figures.

The automatic warehouse system 1 comprises a conveyor device 3 provided for automatically moving a plurality of containers A from one location to another. By way of non-limiting example, the figures refer to a conveyor device of the motor-driven-roller type.

According to a preferred embodiment, the conveyor device 3 may comprise a first conveyor branch 30 configured for automatically transferring a plurality of empty containers A intended to be filled with products, for forming full containers A ready to be shipped. The conveyor device 3 may comprise a second conveyor branch 31 configured for automatically transferring a plurality of full containers A. The first and second conveyor branches 30, 31 are configured for optimizing the conveying flow from/to respective storage areas.

In one or more embodiments, the first and second branches 30, 31 are vertically overlapped to each other, in order to define a lower branch and an upper branch respectively provided for conveying empty and full containers A (or vice-versa). In this connection, in one more embodiments, the conveyor device 3 may comprise further branches vertically overlapped to the first and second branches 30, 31, in order to provide multiple vertical overlapped branches.

As explained more in detail in the following, the aforementioned conveyor device 3 is provided for enabling simultaneous circulation of both empty containers A to be filled with products and formed full containers A to be delivered to a proper final destination.

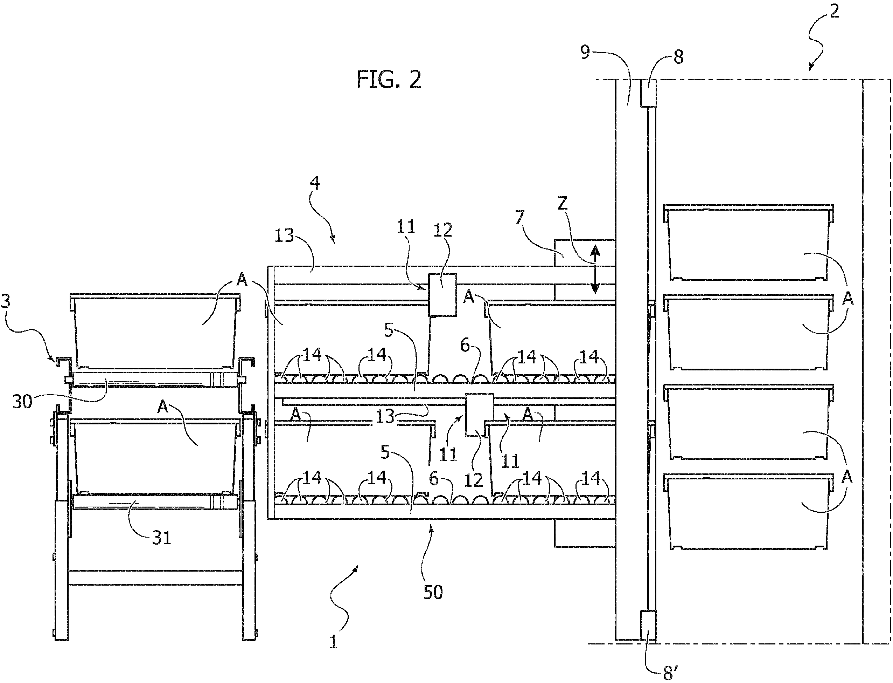

According to a further feature of the invention, the automatic warehouse system 1 comprises at least one shelving unit 2 comprising a plurality of compartments for holding and storing containers A arranged in rows. According to a preferred embodiment shown in Figures 1, 2, the rows are defined by a plurality of compartments vertically and horizontally adjacent to each other, so as to provide multiple vertical and horizontal rows of containers A. In one or more embodiments, the shelving unit 2 is provided for holding both empty and full containers A. In one or more embodiments, the shelving unit 2 is a powered carousel shelving unit configured to bring individual shelves to a standard accessible height at a front access opening. In one or more embodiments, the conveying direction of the conveyor device 3 and the horizontal rows of containers A stacked on the shelving unit 2 are arranged parallel to each other.

According to the invention, the automatic warehouse system 1 comprises at least one container exchange apparatus 4 interposed between the shelving unit 2 and the conveyor 3, configured for exchanging containers A from the conveyor device 3 to the shelving unit 2 and vice-versa. To this end, the shelving unit 2 is arranged with the compartments facing the container exchange apparatus 4.

As illustrated in the figures, the containers exchange apparatus 4 comprises at least a pair of platforms 5 provided for automatically receiving containers A from the shelving unit 2 and the conveyor device 3. The platforms 5 comprise respective holding areas 6 for temporarily hosting the containers A to be exchanged to the shelving unit 2 and the conveyor device 3. By way of the non-limiting example of the figures, each platform 5 comprises two holding areas 6, in such a way that each platform 5 is configured for simultaneously temporarily hosting two containers A (a first container A taken from the conveyor device 3 to be transferred to the shelving unit 2 and a second container A taken from the shelving unit 2 to be transferred to the conveyor device 3).

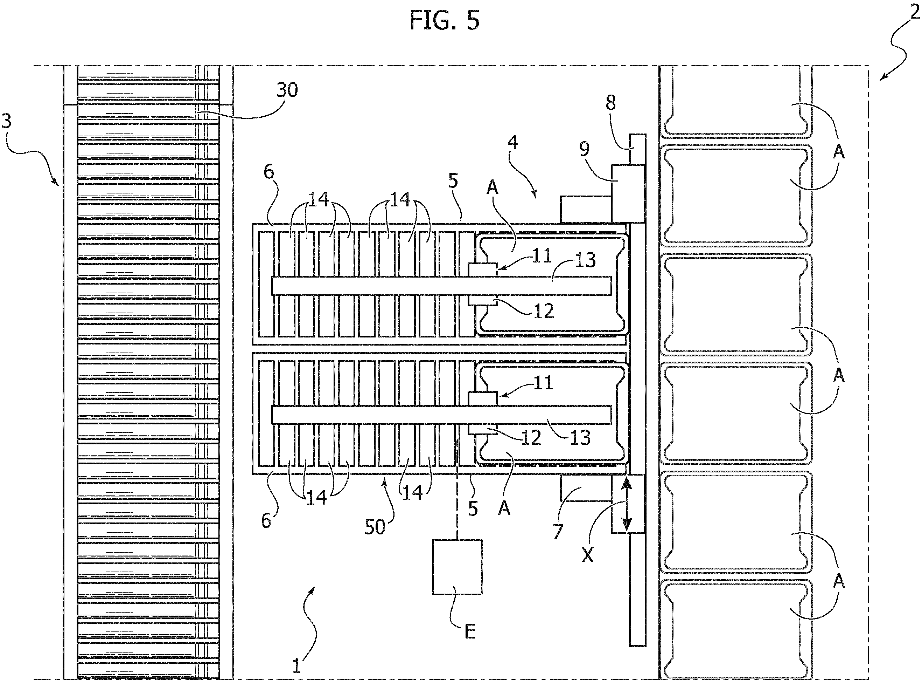

As indicated more in detail in the following, the platforms 5 are provided for horizontally and vertically sliding through the conveyor device 3 and the shelving unit 2 along horizontal and vertical directions X,Z, in such a way that the platforms 5 may be positioned with their support surface defined by the holding areas 6, coplanar with respective surfaces of a branch of the conveyor device 3 and a determined compartment of the shelving unit 2. In this connection, the platforms 5 may be arranged transversely with respect to the conveying direction of the conveyor device 3 and to horizontal rows of containers A stacked on the shelving unit 2 (figure 1, 5). In other words, the platforms 5 may be driven vertically and horizontally alongside the conveyor device 3 and the shelving unit 2, for providing a shifting continuous surface with conveyor branches 30,31 and determined compartments of the shelving unit 2.

In one or more embodiments the pair of platforms 5 define a single platform assembly 50 slidably mounted along the conveyor device 3 and the shelving unit 2.

According to the embodiment of figures 1-3, the single platform assembly 50 comprises two platforms 5 vertically spaced at different heights, so as to provide different floors for transferring containers A from the conveyor device 3 to the shelving unit 2, and vice-versa. Preferably, the platforms 5 may be placed side to side to the overlapped branches 30,31.

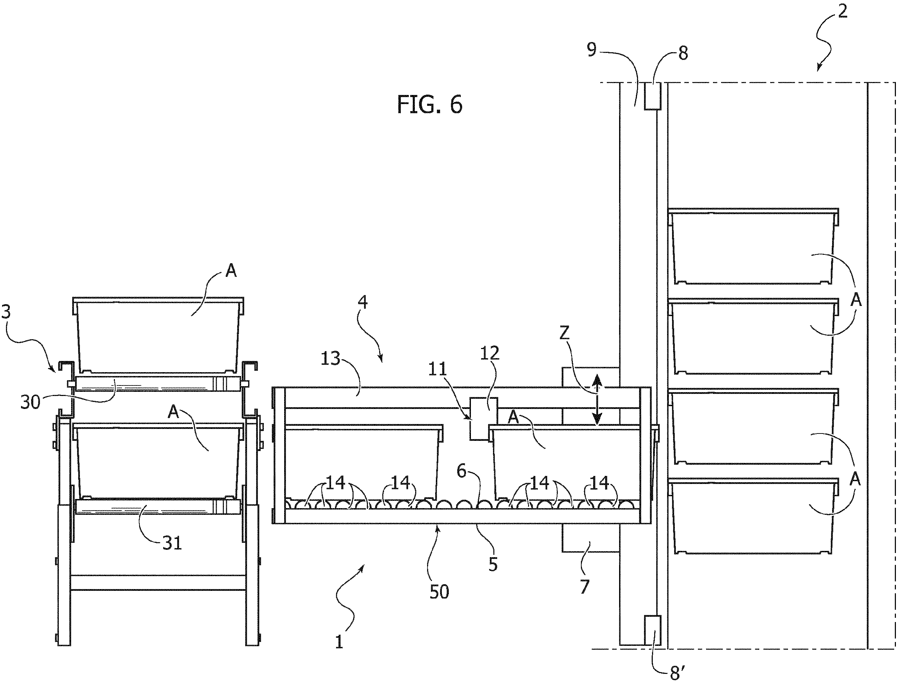

According to the embodiment of figures 5, 6, the single platform assembly 50 comprises two platforms 5 spaced side to side, so as to provide coplanar multiple holding areas 6 for automatically handling a plurality of containers A simultaneously. In this case, the platforms 5 may be placed side to side to different sections of the same conveyor branch 30,31.

In one or more embodiments, the container exchange apparatus 4 comprises a support element 7 having a first portion connected to the platform assembly 50 and a second portion connected to a plurality of rails 8,8' provided for enabling horizontal and vertical travelling of the platform assembly 50 alongside the conveyor device 3 and the shelving unit 2.

According to preferred arrangements of the invention shown in the figures, the rails comprise at least one horizontal rail 8 (two horizontal rails 8,8' in the example of the figures) spaced along the shelving unit 2 or the conveyor device 3 and a beam element 9 slidably mounted on the horizontal rail 8. The horizontal rails 8,8' may be provided at different heights or both on the ground on which rests the shelving unit 2. The support element 7 is slidably mounted on the beam element 9 along a vertical direction Z. To this end, a vertical rail may be provided on the beam element 9 and the second portion of the support element 7 is slidably mounted on the vertical rail, so as to enable vertical travelling of the platform assembly 50 along the vertical rows of containers A stacked on the shelving unit 2 and/or along the branches 30, 31 spaced at different heights. Due to the aforementioned arrangement, the platform assembly 50 may be positioned with its platforms 5 coplanar with respective surfaces of branches 30,31 of the conveyor device 3 and determined shelves (spaced at different heights) of the shelving unit 2.

Naturally, the system 1 comprises a plurality of actuators for driving the vertical and horizontal movement of the platform assembly 50. The actuators are not illustrated in the figures since they can be made according to any known configuration, and since elimination of these details from the figures makes the latter more readily and easily understood.

According to a further important feature of the invention, the container exchange apparatus 4 comprises shifting means 11 associated to each platform 5, configured for transferring containers A from the shelving unit 2 and the conveyor device 3 to the platforms 5, and vice-versa. The shifting means 11 may be driven between a passive position in which they do not interfere with the containers A conveyed on the conveyor device 3 and stacked on the shelving unit 2, and an active position in which they drive a transverse movement of the containers A for carrying selected containers A onboard the platforms 5 or releasing the containers A hosted on the holding areas 6.

As illustrated in figures 2, 3, 5, for each platform 5, the shifting means 11 may comprise at least one picking unit 12 slidably mounted along the platform 5. In one or more embodiments, the container exchange apparatus 4 comprises a number of picking units 12 corresponding to the number of the holding areas 6, so that each picking unit 12 acts on a respective holding area 6. The shifting means 11 comprises a pair of picking units 12, respectively associated to the pair of holding areas 6 of each platform 5.

In one or more embodiments, the picking units 12 are slidably mounted along a further horizontal direction Y perpendicular to the horizontal sliding direction X of the platform assembly 50 (figures 2, 3, 6). The picking units 12 may be slidably mounted on respective auxiliary rails 13, which may be provided directly onboard the platforms 5.

According to a preferred arrangement of the invention, the system 1 is configured for simultaneously transferring containers A to/from both the holding areas 6, so as to reduce handling cycle downtimes. Naturally, the picking units 12 may be driven (by actuators not illustrated) once the platform assembly 50 is positioned correctly coplanar and next to horizontal rows of the containers A stacked on the shelving unit 2 and to branches of the conveyor device 3.

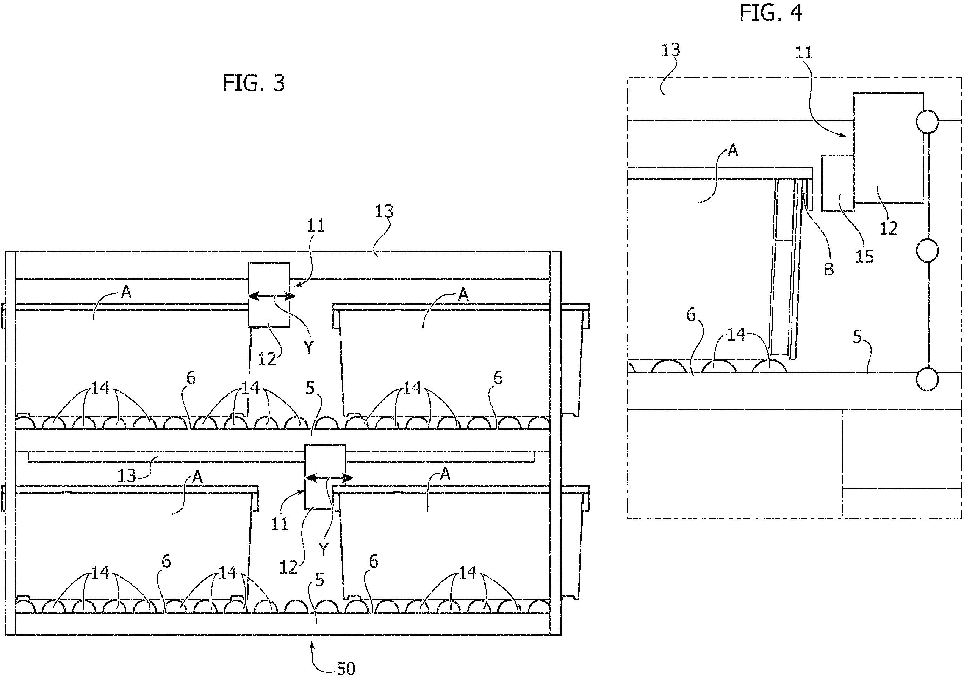

In one or more embodiments, each picking unit 12 is configured for pushing a container A from one holding area 6 to the conveyor device 3 or the shelving unit 2, and pulling a container A from the conveyor device 3 or the shelving unit 2 towards the holding area 6. The pushing operation of one container A temporarily hosted on the holding area 6 may be accomplished by a pressure carried out by the horizontal movement of the picking unit 12 along the platform 5. The pressure may be applied on a lateral wall of the container A. As illustrated in figure 3, the picking unit 12 may comprise a picking element 15 which may be actuated for grasping the container A and pulling the container A from the conveyor device 3 or the shelving unit 2 to the platform 5. Preferably, the picking element 15 may be actuated along multiple directions for grasping one lateral handle B of the container A. Naturally, the picking unit 12 may comprise picking elements 15 of different types, such as vacuum grippers, magnets, mechanical grippers, etc. The picking unit 12 may incorporate suitable sensors for detecting the effective gripping of the container A.

According to a further preferred feature illustrated in figures 2-6, the shifting means 11 may comprise a plurality of rollers 14 (for example motorized rollers) provided at the support surface of the holding areas 6, for facilitating shifting of the containers A on the platforms 5.

In one or more embodiments, the containers exchange operations are carried out only by means of respective picking units 12. Each platform 5 may temporarily host a single container A, due to the fact that before loading a second container A on board of the platform 5, the picking unit 12 has to transfer the current onboard container A from the platform 5 to the shelving unit 2 or the conveyor device 3. According to this embodiment, the picking unit 12 may be driven alongside the current on-board container A in order to be positioned from one side of the current container A (where a pulling operation is carried out) to an opposite side (for actuating a pushing operation) and complete the transfer operations.

The automatic warehouse system 1 comprises at least one electronic control unit E (illustrated in Figures 1, 5) configured to control the operations for handling the containers A. Naturally, the system 1 may comprise a plurality of control units in communication to each other, for respectively driving different operation of the handling cycle.

According to the invention, the electronic control unit E is programmed for driving the transfer of containers A from the shelving unit 2 and the conveyor device 3, to the respective holding area 6, and exchanging the containers A with the conveyor device 3 and the shelving unit 2, sequentially or simultaneously. Preferably, the electronic control unit E is configured for enabling a simultaneous or sequential circulation of both empty containers A and formed full containers A. After the exchange operations of a pair of containers A are carried out, the electronic control unit E is configured for driving the vertical and horizontal sliding of the platform assembly 50 along the conveyor device 3 and the shelving unit 2, in order to position the platforms 5 coplanar with different branches of the conveyor device 3 and compartments of the shelving unit 2. Once the platforms 5 stop at the selected position, the shifting means 11 of each platform 5 are actuated for carrying containers A onboard the holding areas 6.

The electronic control unit E may be programmed for driving the entire handling cycle in order to minimize the downtime periods.

The electronic control unit E may be configured for automatically selecting a determined sequence of positions in which the platform assembly 50 stops for loading new containers A, based on an automated evaluation criterion. Said automated evaluation criterion may consider at least one of the following:
- an information related to the containers A to be picked, such as the type of products contained, which may be acquired through reading a barcode present on the container A, before picking and/or placing it;
- the intended delivery destination of the containers A;
- timing of shipping;
- other containers A previously picked in the same handling cycle.

In this connection, the system 1 may comprise a plurality of motion sensors configured for sending a command signal to the control unit E for confirming effective accomplishment of the different cycle steps (such as confirming the presence of containers A onboard the platforms 5 and/or confirming release of the containers A on the conveyor branch 3 and the shelving unit 2).

During operation, the electronic control unit E may drive the following cycle:
- sliding the platform assembly 50 along the conveyor device 3 and the shelving unit 2,
- stopping the platform assembly 50 at a selected position in which the platforms 5 are substantially coplanar with branches of the conveyor device 3 and different compartment holding surfaces of the shelving unit (2),
- for each platform 5:
- pulling a container A out from the shelving unit 2 or the conveyor device 3 by means of the shifting means 11 and sliding the container A at a first holding area 6,
- pushing the container A by means of the shifting means 11 and sliding the full container A at the shelving unit 2 or the conveyor device 3.

Preferably, the system 1 is configured for exchanging both full and empty containers A.

It is to noted, that before the aforementioned pushing step, the electronic control unit E may drive sliding of the platform assembly 50 (with the holding areas 6 loaded) for positioning the platform assembly 50 at a new position for releasing the containers A temporarily hosted on the platforms 5.

As compared to the prior art, the method and system 1 according to the present invention have the following advantages:
- all the operations for handling the containers A are totally automated,
- ensuring high repeatability and reliability of the operations,
- ensuring quick automated operations for handling the containers A,
- modulating the operations according to the logistic requirements.

Of course, without prejudice to the principle of the invention, the details of construction and the embodiments can be widely varied with respect to those described and illustrated, without thereby departing from the scope of the invention as defined by the claims that follow.

## Claims

1. Method for automatically handling a plurality of product containers (A), comprising:
- providing at least one container exchange apparatus (4) interposed between a shelving unit (2) and a conveyor device (3),
- wherein the container exchange apparatus (4) comprises at least a pair of platforms (5) provided for automatically receiving containers (A) from the shelving unit (2) and the conveyor device (3), said pair of platforms (5) comprising respective holding areas (6) for temporarily hosting containers (A) to be transferred,
- wherein the container exchange apparatus (4) comprises shifting means (11) associated with the platforms (5), configured for exchanging containers (A) from the conveyor device (3) to the shelving unit (2), and vice-versa, via the platforms (5),
- connecting said pair of platforms (5) to a plurality of rails (8,8'),
- moving the platforms (5) along the conveyor device (3) and the shelving unit (2) along horizontal and vertical directions (X,Z),
- stopping the platforms (5) along a selected position in which the platforms (5) are substantially coplanar with the conveyor device (3) and determined compartment holding surfaces of the shelving unit (2),
- driving said shifting means (11) for exchanging containers (A) from the conveyor device (3) to the shelving unit (2), and vice-versa.

2. The method of claim 1, wherein said pair of platforms (5) define a single platform assembly (50) slidably mounted along the conveyor device (3) and the shelving unit (2).

3. The method of claim 2, wherein said single platform assembly (50) comprises two platforms (5) vertically spaced at different heights, so as to provide different floors for transferring containers A from the conveyor device (3) to the shelving unit (2), and vice-versa.

4. The method of claim 2, wherein said single platform assembly (50) comprises two platforms (5) spaced side to side, so as to provide coplanar multiple holding areas (6) for automatically handling a plurality of containers simultaneously.

5. The method of claim 1, comprising driving simultaneously the automatic exchange of containers (A) from said shelving unit (2) to the conveyor device (3), and vice-versa, on both the platforms (5).

6. The method of claim 1, comprising the step of driving the shifting means (11) between a passive position in which they do not interfere with the containers (A) conveyed on the conveyor device (3) and stacked on the shelving unit (2), and an active position in which they drive a transverse movement of the containers (A) for carrying selected containers (A) onboard the holding areas (6).

7. The method of claim 2, wherein the step of moving the single platform assembly (50) along the conveyor device (3) and the shelving unit (2) comprises horizontally and vertically sliding the platform assembly (50) along horizontal and vertical directions (X, Z) .

8. The method of claim 1, comprising driving the simultaneous automatic circulation of both empty and full containers (A).

9. An automatic warehouse system (1) for handling product containers (A) comprising:
- a shelving unit (2) comprising a plurality of compartments for holding and storing containers (A) arranged in rows,
- a conveyor device (3) configured for automatically conveying a plurality of containers (A),
- at least one container exchange apparatus (4) interposed between said shelving unit (2) and said conveyor device (3), comprising:
- at least a pair of platforms (5) provided for automatically receiving containers (A) from the shelving unit (2) and the conveyor device (3), said pair of platforms (5) comprising holding areas (6) for temporarily hosting containers (A) to be transferred,
- wherein the container exchange apparatus (4) comprises shifting means (11) associated with the platforms (5), configured for exchanging containers (A) from the conveyor device (3) to the shelving unit (2), and vice-versa, via the platforms (5),
- a plurality of rails (8,8') extended along at one side of the shelving unit (2) and/or the conveyor device (3), for enabling travelling of the platforms (5) along the conveyor device (3) and the shelving unit (2),
- an electronic control unit (E) programmed for driving the shifting means (11), so as to exchange containers (A) from the conveyor device (3) to the shelving unit (2), and vice-versa.

10. The system of claim 9, wherein said plurality of rails (8,8') comprises:
- at least one horizontal rail (8) spaced at a side of the shelving unit (2) or the conveyor device (3),
- a beam element (9) slidably mounted on the horizontal rail (8),
- a vertical rail provided on the beam element (9),
- wherein the platforms (5) are slidably mounted on said vertical rail,
- so as to enable travelling of the platforms (5) along horizontal and vertical directions (X,Z).

11. The system of claim 9, wherein for each platform (5) said shifting means (11) comprises at least one picking unit (12) slidably mounted on at least one auxiliary rail (13), along a further horizontal direction (Y).

12. The system of claim 11, wherein said picking unit (12) is configured for pushing a container (A) from one holding area (6) to the conveyor device (3) and/or the shelving unit (2), and pulling a container (A) from the conveyor device (3) and/or the shelving unit (2) to one holding area (6).

13. The system of claim 12, wherein said picking unit (12) comprises a picking element (15) configured for gripping a lateral portion of the container (A), controllable between a passive position and an active position.

14. A computer program product, directly loadable in the memory of at least one computer and including software code portions for performing the method of any of claims 1 to 8.
